(19) Europäisches Patentamt / European Patent Office / Office européen des brevets

(11) **EP 2 446 589 B1**

(12) **EUROPÄISCHE PATENTSCHRIFT**

(45) Veröffentlichungstag und Bekanntmachung des Hinweises auf die Patenterteilung:
**13.07.2016 Patentblatt 2016/28**

(21) Anmeldenummer: **10726418.6**

(22) Anmeldetag: **08.05.2010**

(51) Int Cl.:
*H04L 12/44* (2006.01)     *H04J 3/06* (2006.01)
*H04L 12/417* (2006.01)     *H04L 12/40* (2006.01)

(86) Internationale Anmeldenummer:
**PCT/EP2010/002819**

(87) Internationale Veröffentlichungsnummer:
**WO 2010/149248 (29.12.2010 Gazette 2010/52)**

(54) **STERNKOPPLER FÜR EIN BUSSYSTEM, BUSSYSTEM MIT EINEM SOLCHEN STERNKOPPLER SOWIE VERFAHREN ZUM AUSTAUSCHEN VON SIGNALEN IN EINEM BUSSYSTEM**

STAR COUPLER FOR A BUS SYSTEM, BUS SYSTEM HAVING SUCH A STAR COUPLER, AND METHOD FOR EXCHANGING SIGNALS IN A BUS SYSTEM

COUPLEUR EN ÉTOILE POUR UN SYSTÈME DE BUS, SYSTÈME DE BUS AVEC UN TEL COUPLEUR EN ÉTOILE ET PROCÉDÉ D ÉCHANGE DE SIGNAUX DANS UN SYSTÈME DE BUS

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **24.06.2009   DE 102009030204**

(43) Veröffentlichungstag der Anmeldung:
**02.05.2012   Patentblatt 2012/18**

(73) Patentinhaber:
• **Audi AG**
  **85045 Ingolstadt (DE)**
• **Audi Electronics Venture GmbH**
  **85080 Gaimersheim (DE)**

(72) Erfinder: **MILBREDT, Paul**
  **85055 Ingolstadt (DE)**

(74) Vertreter: **Brandt, Kai**
  **Audi AG**
  **Patentabteilung I/EZ-1**
  **85045 Ingolstadt (DE)**

(56) Entgegenhaltungen:
**EP-A1- 2 148 474     WO-A2-2008/029318**
**WO-A2-2008/029320**

**Beschreibung**

Die Erfindung betrifft einen Sternkoppler für ein Bussystem sowie ein Bussystem, in dem ein solcher Sternkoppler eingesetzt ist. Sie betrifft auch ein Verfahren zum Austauschen von Signalen in einem Bussystem, in dem eine Mehrzahl von Buszweigen über einen Sternkoppler gekoppelt ist.

Ein Sternkoppler ist das zentrale Element einer Sternschaltung. An einen solchen Sternkoppler sind mehrere Buszweige angeschlossen. Jeder Buszweig umfasst zumindest ein Steuergerät, wobei zumindest ein Teil der Steuergeräte senden und ein Teil der Steuergeräte empfangen kann, bevorzugt zumindest ein Teil der Steuergeräte sowohl senden als auch empfangen kann. Aufgabe eines Sternkopplers ist es, die von einem Zweig eintreffenden Signale an die anderen Zweige weiterzuleiten. Ein aktiver Sternkoppler verstärkt hierbei die Signale. So ist beispielsweise aus der DE 10 2005 061 395 A1 ein aktiver Sternpunkt für den Einsatz in einem Kommunikationssystem mit Sterntopologie bekannt, der eingehende analoge Signale mit Hilfe eines Operationsverstärkers verstärkt und weiterleitet. Es ist hierbei erwähnt, dass ein eingehendes Datensignal auf einen oder mehrere der übrigen Zweige verteilt werden kann. Wegen der rein analogen Betriebsweise des aktiven Sternpunkts aus der DE 10 2005 061 395 A1 ist dieser jedoch nicht zur Verwendung in zeitgesteuerten Systemen geeignet.

In zeitgesteuerten Bussystemen wie etwa in in Kraftfahrzeugen eingesetzten FlexRay-Systemen oder TTP/C-Systemen wird eine Zykluszeit in mehrere Zeitschlitze eingeteilt. In jedem Zeitschlitz darf nur ein bestimmtes Steuergerät senden, damit es nicht zu Signalinterferenzen mit den Signalen eines anderen Steuergeräts kommt. In solchen zeitgesteuerten Systemen gibt es sogenannte Buswächter (Englisch: bus guardians), die überprüfen, ob ein Teilnehmer (Steuergerät) des Bussystems zum jeweiligen Zeitpunkt, also in einem aktuellen Zeitschlitz, überhaupt senden darf. Der Buswächter bestimmt auch, ob die Botschaft weiterverbreitet werden darf. Ein solcher Buswächter kann in einen Sternkoppler integriert werden. Bei zeitgesteuerten Systemen besteht ein solcher Sternkoppler üblicherweise aus kaskadierten Transceivern für jeden Zweig. Aus Sicht des Sternkopplers ist an eine Mehrzahl von Anschlüssen, an die Buszweige anschließbar sind, jeweils ein solcher Tranceiver, also ein Sender-Empfänger zugeordnet. Transceiver wandeln über den jeweiligen zugehörigen Anschluss einlaufende analoge Signale in digitale Signale und zu dem jeweiligen zugehörigen Anschluss hinlaufende Signale von digitalen Signalen in analoge Signale um. In der Phase, in der die Signale in digitale Signale gewandelt sind und noch nicht in analoge Signale zurückgewandelt sind, kann die Buswächterfunktion eingesetzt werden. Typischerweise umfasst der Sternkoppler dann einen Zeitgeber, um einzelne Zeitschlitze voneinander unterscheiden zu können. Mit steigender Zahl von Busteilnehmern stoßen Busse an Grenzen, was ihre Übertragungskapazität angeht. Beispielsweise hat ein FlexRay-Bus eine Busbandbreite von 10 MBit. Man wünscht, diese Bandbreite möglichst optimal auszunutzen. Hierzu ist man dazu übergegangen, das Bussystem in einzelne Cluster aufzuteilen, wobei die Busteilnehmer eines Clusters in zu dem Cluster definierten Zeitschlitzen senden dürfen. Der Austausch von Daten zwischen unterschiedlichen Clustern ist nur möglich, wenn ein sogenanntes Gateway eingesetzt wird. Bei zeitgesteuerten Systemen müssen in jedem Clustersystem zumindest zwei Synchronisationsknoten vorhanden sein. Zur Absicherung der Kommunikation muss in jedem Cluster ein eigener Buswächter eingesetzt werden.

In der WO 2008/029320 A2 ist ein Sternkoppler für eine zeitgesteuerte Kommunikation beschrieben, wie er in einem Kraftfahrzeug eingebaut sein kann. Der Sternkoppler weist einen Switch auf, über welchen Daten zwischen unterschiedlichen Anschlüssen des Switches unabhängig voneinander parallel übertragen werden können. Durch den Sternkoppler sind mehrere FlexRay-Busse miteinander gekoppelt. Das Kommunikationsnetzwerk aus dem Sternkoppler und den Bussen kann zusätzlich einen zentralen Buswächter aufweisen, der mit den einzelnen Bussen verbunden ist.

Es ist Aufgabe der Erfindung, die Effizienz der Datenübertragung in zeitgesteuerten Bussystemen zu verbessern.

Die Aufgabe wird durch die Gegenstände der unabhängigen Patentansprüche.

Die Aufgabe wird somit gelöst durch einen Sternkoppler für ein Bussystem mit einer Mehrzahl von Anschlüssen, an die Buszweige anschließbar sind, wobei die Anschlüsse über einen jeweiligen Sender-Empfänger mit einer digitalen Datenverarbeitungseinheit gekoppelt sind, wobei die Sender-Empfänger über den jeweils zugehörigen Anschluss einlaufende analoge Signale in zur Datenverarbeitungseinheit weiterlaufende digitale Signale wandeln und von der Datenverarbeitungseinheit ausgesandte digitale Signale in zu dem jeweiligen zugehörigen Anschluss weiterlaufende analoge Signale wandeln, wobei die Datenverarbeitungseinheit einen Zeitgeber umfasst, so dass für jeden Anschluss die Zeit in eine sich zyklisch wiederholende Folge von Zeitschlitzen einteilbar ist, und wobei die Datenverarbeitungseinheit dazu ausgelegt ist, ein von einem Anschluss in einen vorbestimmten zu dem Anschluss definierten Zeitschlitz erhaltenes Signal an zumindest einen gemäß einer vorbestimmten Zuordnung festgelegten weiteren Anschluss in einem durch die vorbestimmte Zuordnung festgelegten zu dem weiteren Anschluss definierten Zeitschlitz weiterzuleiten.

Dadurch, dass in dem erfindungsgemäßen Sternkoppler ein Weiterleiten von Signalen nicht, automatisch erfolgt, sondern definiert aufgrund der vorbestimmten Zuordnung, kann das Bussystem durch geeignete Gestaltung dieser vorbestimmten Zuordnung optimal für die jeweiligen Zwecke ausgelegt werden. Die Zuordnung kann insbesondere so aussehen, dass anders als bisher nicht in jedem Zeitschlitz sämtliche Signale, die von einem ersten Anschluss empfangen werden, an sämtliche weiteren Anschlüsse weitergeleitet werden. So ist es in zumindest einem Zeitschlitz möglich, dass der Sternkoppler das Bussystem (das Netz) virtuell in mehrere Teilsysteme (Teilnetze) teilt, in dem er nur innerhalb der Teilsysteme Botschaften weiterleitet. Es ist insbesondere möglich, dass der Sternkoppler mit zeitlicher Überschneidung, z. B. bei globaler Definition der Zeitschlitzfolge in demselben Zeitschlitz über zwei Anschlüsse Signale empfängt, wobei er von dem ersten Anschluss das Signal an einen ersten weiteren Anschluss weiterleitet und von dem zweiten Anschluss das Signal an einen zweiten weiteren Anschluss weiterleitet. Der an dem ersten Anschluss angeschlossene Buszweig bildet dann mit dem an dem ersten weiteren Anschluss angeschlossenen Buszweig für die Dauer des Zeitschlitzes ein Teilnetz und der an dem zweiten Anschluss angeschlossene Buszweig bildet mit dem zweiten weiteren Anschluss angeschlossenen Buszweig dann ebenfalls ein Teilnetz. Der Sternkoppler hat durch die Beobachtung der Zeitschtitze gleichzeitig die Funktion eines Buswächters. Auch wenn virtuell mehrere Teilnetze gebildet werden, genügt ein einziger Sternkoppler als Teil beider Teilnetze, und dieser hat gleichzeitig die Funktion des Buswächters für sämtliche Teilnetze. Somit wird die Bandbreite, die das FlexRay-Bus-System bietet, optimal ausnutzbar. Es ist nicht in einzelnen Teilsystemen jeweils eine gesonderte Uhrensynchronisation erforderlich, denn weil aufgrund der Zuordnung vorgesehen sein kann, dass ein Signal in einem oder mehreren Zeitschlitzen an sämtliche Buszweige weitergeleitet wird, kann über dieses Signal eine Uhrensynchronisation erfolgen. Somit sind keinerlei Änderungen am Protokoll notwendig. Es kann auf ein Gateway verzichtet werden. Dadurch ist die Lösung besonders preisgünstig.

Bei der Erfindung sind die Zeitschlitze global definiert, für jeden Anschluss ist also die gleiche Folge von Zeitschlitzen definiert. Dies erleichtert die Handhabung und Zuordnung.

Bevorzugt arbeitet die Datenverarbeitungseinheit so schnell, dass die Signale im selben Zeitschlitz weitergegeben werden können wie sie empfangen wurden. Es ist bei der Erfindung aber möglich, bewusst die Signale in einem anderen (insbesondere späteren) Zeitschlitz weiterzugeben als sie eintreffen. Dadurch wird die Flexibilität in der Kommunikation erhöht.

Die Zuordnung ist bei einer Ausführungsform insbesondere vom Zeitschlitz abhängig und für unterschiedliche Zeitschlitze verschieden, auch wenn das Signal über denselben Anschluss eintrifft. Mit anderen Worten kann die Zuordnung für über zumindest einen Anschluss eintreffende Signale für zwei unterschiedliche zu dem Anschluss definierte Zeitschlitze unterschiedlich sein. Ein Busteilnehmer in dem an genau diesem Anschluss angeschlossenen Buszweig kann also einmal Signale für ein Teilnetz aussenden und ein anderes Mal für das gesamte Netz. Dies lässt sich so ausdrücken, dass für zumindest einen der Anschlüsse gilt, dass ein in einem ersten zu diesem Anschluss definierten Zeitschlitz eintreffendes Signal an einen ersten weiteren Anschluss weitergeleitet wird und ein in einem zweiten zu diesem Anschluss definierten Zeitschlitz eintreffendes Signal nicht an den ersten weiteren Anschluss weitergeleitet wird. Der erste weitere Anschluss kann einfach entfallen. Das letztere Signal kann z.B. statt dessen an einen zweiten weiteren Anschluss weitergeleitet werden, an den das erste Signal nicht weitergeleitet wird.

Es ist möglich, in zumindest einem Zeitschlitz Signale über zumindest zwei unterschiedliche Anschlüsse zu empfangen und das von einem ersten Anschluss eintreffende Signal an zumindest einen ersten weiteren Anschluss weiterzuleiten und das von dem zweiten Anschluss im selben Zeitschlitz eintreffende Signal an zumindest einen zweiten weiteren Anschluss weiterzuleiten. Dies ist genau die Situation, dass das Bussystem in zwei Teilsysteme aufgeteilt wird, zumindest für die Dauer des betreffenden Zeitschlitzes.

Die Zeitschlitze müssen bei dem erfindungsgemäßen Sternkoppler nicht global definiert sein. Es ist auch eine Ausführungsform denkbar, bei dem unterschiedliche Zeitschlitzfolgen zu unterschiedlichen Anschlüssen definiert sind. Bevorzugt ist dann aber die Zykluszeit, die in unterschiedliche Zeitschlitze eingeteilt wird, dieselbe. Das Verwenden unterschiedlicher Zeitschlitze kann hilfreich sein, wenn in verschiedenen Buszweigen unterschiedliche Steuergeräte mit möglicherweise unterschiedlichen Grundeinstellungen verwandt werden sollen. Dann wird eine aufwendige Anpassung vermieden. Eine Zuordnung kann dennoch möglich sein. Beispielsweise kann die Zykluszeit bei einem ersten Anschluss in vier Zeitschlitze eingeteilt und bei einem zweiten Anschluss in sechs Zeitschlitze eingeteilt sein. Dann beginnen der erste Zeitschlitz bei beiden Anschlüssen gleichzeitig und der dritte Zeitschlitz bei dem Anschluss mit den vier Zeitschlitzen sowie der vierte Anschluss bei dem Anschluss mit den sechs Zeitschlitzen gleichzeitig. Es können insbesondere Signale, die in kürzeren Zeitschlitzen empfangen wurden, in den längeren Zeitschlitzen weitergeleitet werden.

Der erfindungsgemäße Sternkoppler findet bevorzugt Einsatz in einem Bussystem, wenn an ihn zumindest drei Buszweige (an verschiedenen Anschlüssen) angeschlossen sind. Bei drei Buszweigen kann die Kommunikaton global erfolgen, also ein Signal, das über einen ersten Buszweig eintritt, kann an die zwei weiteren Buszweige weitergesandt werden. Es ist die Bildung einer Untergruppe aus zwei Buszweigen möglich, bei dem die Signale des einen der beiden Buszweige zum zweiten der beiden Buszweige gesandt wird, der dritte Buszweig aber von der Kommunikation ausgeschlossen wird. Bei vier Buszweigen sind sogar zwei Teilnetze definierbar.

So kann die Datenverarbeitungseinheit des Sternkopplers dazu ausgelegt sein, ein von einem Buszweig an einem Anschluss eintreffendes Signal nur an einen Teil der weiteren Buszweige weiterzuleiten, zumindest in einem vorbestimmten Zeitschlitz. Überschneidet sich bei Verwendung von vier Buszweigen die Zeitdauer des Empfangs von Signalen, was insbesondere der Fall ist, wenn eine Zeitschlitzfolge global definiert ist und in ein- und demselben Zeitschlitz Signale von zwei unterschiedlichen Buszweigen empfangen werden, so lässt sich ein von einem ersten Buszweig eintreffendes Signal an einen ersten weiteren Buszweig weiterleiten und ein von einem zweiten Buszweig eintreffendes Signal an einen zweiten weiteren Buszweig weiterleiten.

Bei dem erfindungsgemäßen Verfahren zum Austauschen von Signalen in einem Bussystem, in dem eine Mehrzahl von Buszweigen über einen Sternkoppler gekoppelt ist, wobei zu jedem Buszweig eine Folge von Zeitschlitzen definiert ist, wird in zumindest einem ersten Buszweig (von einem dort angeschlossenen Steuergerät als Busteilnehmer) in zumindest einem zu diesem ersten Buszweig definierten Zeitschlitz ein Signal ausgesandt, und der Sternkoppler leitet das Signal an zumindest einen in Abhängigkeit von dem ersten Buszweig und dem Zeitschlitz, in dem das Signal ausgesandt wurde, festgelegten weiteren Buszweig weiter.

Wesentlich ist, dass der Sternkoppler bei der Festlegung des weiteren Buszweigs eine Abhängigkeit von dem Buszweig, über den das Signal eintrifft und dem Zeitschlitz, in welchem es eintrifft, hat. Ein solcher Sternkoppler muss die Signale in digitaler Form vorliegen haben und über eine Datenverarbeitungseinheit verfügen, über die die Festlegung des weiteren Buszweiges erfolgt.

Es ist insbesondere möglich, dass sich zeitlich überschneidende Signale in zwei Buszweigen ausgesandt werden, von dem Sternkoppler empfangen werden und zu unterschiedlichen weiteren Buszweigen weitergeleitet werden. Bevorzugt geschieht dies bei globaler Definition der Zeitschlitze oder teilglobaler Definition: Bei zumindest einer Teilmenge von Buszweigen ist dieselbe Folge von Zeitschlitzen definiert. In einem ersten dieser Zeitschlitze wird in zumindest zwei Buszweigen der Teilmenge ein Signal ausgesandt, und die beiden Signale werden an unterschiedliche Buszweige (insbesondere der Teilmenge) weitergeleitet.

Diese Aufteilung des Bussystems in zwei Teilsysteme geschieht vorzugsweise nur in dem ersten der Zeitschlitze, während in einem zweiten der Zeitschlitze in nur einem Buszweig der Teilmenge ein Signal ausgesandt wird und an alle weiteren Buszweige (insbesondere der Teilmenge), bevorzugt aber überhaupt an alle Buszweige, weitergeleitet wird. Während des zweiten der Zeitschlitze ist dann das gesamte Bussystem als einheitliches Bussystem anzusehen, und es kann insbesondere eine Uhrensynchronisation stattfinden.

Der Sternkoppler kann Nachrichten dekodieren, um entscheiden zu können, ob er sie für die Uhrensynchronisation benutzt oder nicht. Dazu muss er auch deren zeitliches Eintreffen beachten.

Der Sternkoppler ist vorzugsweise in analogen und digitalen Halbleiterprozessen gefertigt. Im bevorzugten Fall in einem gemischten Prozess in einem Die oder mit zwei Dies in einem Gehäuse

Auf dem Bussytem sind vorzugsweise zumindest drei Zustände definiert: IDLE, 0 und 1. Dazu gibt es zwei Leitungen, Bus-Plus (BP) und Bus-Minus (BM). Die Spannungen ergeben sich beispielsweise wie folgt:

$$BP = BM = 2{,}5V = IDLE \text{ (wenn niemand sendet)}$$

$$BP - (150 \text{ bis zu } 1000 \text{ mV}) = BM + (150 \text{ bis zu } 1000 \text{ mV}) = \text{"1"}$$

$$BP + (150 \text{ bis zu } 1000 \text{ mV}) = BM - (150 \text{ bis zu } 1000 \text{ mV}) = \text{"0"}$$

Der Sternkoppler verfügt insbesondere über einen Clock-Eingang (Quarz), da die Digitallogik einen Takt benötigt.

Der Sternkoppler betreibt ein vorgegebenes Routing nach einer vorgegebenen Switch-Matrix. Er kann jedes Mal beim Anlegen der Spannung konfiguriert werden. Dazu ist die Switch-Matrix dann in einem internen RAM abgelegt. Oder die Konfiguration liegt in einem internen Flash-Speicher. Diese Konfiguration sollte änderbar sein, wenn z.B. im Rahmen der Fahrzeugpflege neue Steuergeräte hinzukommen.

Nachfolgend wird eine bevorzugte Ausführungsform der Erfindung unter Bezug auf die Zeichnung beschrieben, wobei

Fig. 1    schematisch einen erfindungsgemäßen Sternkoppler veranschaulicht und

Fig. 2    eine Zuordnung von gesendeten und empfangenen Nachrichten veranschaulicht, die durch den erfindungsgemäßen Sternkoppler möglich ist.

Ein im Ganzen mit 10 bezeichneter Sternkoppler weist eine Mehrzahl von Anschlüssen 11 auf. An die Anschlüsse sind insbesondere FlexRay-Busse FR1, FR2, FR3, ..., FRn anschließbar. Aus Sicht des gesamten Bussystems handelt es sich hierbei um einzelne Buszweige. Jeder Anschluss 11 ist mit einem Sender-Empfänger 12 (der auch als Bustreiber bezeichenbar ist) gekoppelt. Der Sender-Empfänger wandelt über den Anschluss 11 eintreffende analoge Signale in digitale Signale um und sendet sie an eine Datenverarbeitungseinrichtung 13 weiter, der Sender-Empfänger 12 empfängt auch digitale Daten von der Datenverarbeitungseinrichtung 13 und wandelt sie in analoge Signale zum Anschluss 11 hin um.

Die digitale Datenverarbeitungseinrichtung 13 kann als FPGA ("Field Programmable Gate Array", kundenprogrammierbares Gate-Array), oder auch als Mikrocontroller oder digitaler Signalprozessor ausgelegt sein. Funktionelle Teileinheiten der Datenverarbeitungseinheit 13 sind gezeigt und mit 14, 16 und 18 bezeichnet. Eine Zuordnungseinheit 14 empfängt Signale von den Anschlüssen 11 und damit den zugehörigen Buszweigen FR1 bis FRn und sendet umgekehrt auch Signale an diese. Die Zuordnungseinheit ist mit einem Zeitgeber ("Clock") 16 gekoppelt. Die Datenverarbeitungseinheit 13 umfasst ferner eine Buswächtereinheit 18. Die Buswächtereinheit 18 kann aufgrund des Zeitsignals beurteilen, ob von den Anschlüssen 11 eintreffende Signale zulässig sind oder nicht. In dem gesamten Bussystem ist nämlich in dem Buszweig FR1, FR2, FR3 bis FRn zugeteilt, in welchem Zeitschlitz Signale gesandt werden dürfen. Aus Sicht des Sternkopplers 10 ist es unerheblich, welcher Busteilnehmer in dem jeweiligen Buszweig FR1 bis FRn sendet. Alle zulässig ausgesandten und von dem Sternkoppler 10 empfangenen Signale werden von der Zuteilungseinheit weitergeleitet, und zwar nach einer vorbestimmten Zuordnung. Die Zuteilungseinheit 14 ordnet die Signale in Abhängigkeit von dem Zeitschlitz, in dem sie eintreffen, zu. Die Signale können an sämtliche weiteren Anschlüsse der Anschlüsse 11 weitergeleitet werden, über die sie nicht empfangen wurden. Die Signale können auch nur an einen Teil der Anschlüsse 11 weitergeleitet werden. Es ist insbesondere möglich, dass in ein- und demselben Zeitschlitz von zweien der Anschlüsse 11 Signale empfangen werden, wobei diese zu unterschiedlichen der weiteren Anschlüsse weitergeleitet werden.

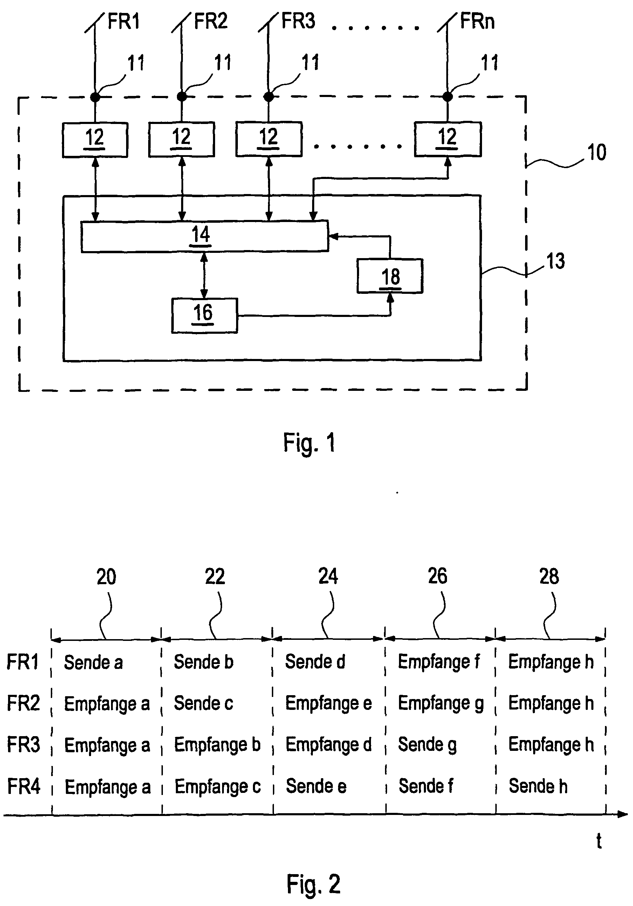

Dies ist in Fig. 2 erläutert. Fig. 2 zeigt für vier FlexRay-Zweige FR1 bis FR4 eine zeitliche Abfolge mit dem Zeitstrahl als Abszisse, welche Nachrichten (Signale) empfangen und ausgesendet werden.

In einem ersten Zeitschlitz 20 wird im Buszweig FR1 die Nachricht a gesendet. Der Sternkoppler 10 leitet diese Nachricht an sämtliche weiteren Buszweige weiter, sie wird also von den Buszweigen FR2, FR3 und FR4 empfangen. Im Zeitschlitz 20 arbeitet der Sternkoppler 10 wie ein herkömmlicher aktiver Sternkoppler.

Im Zeitschlitz 22 nun wird in gleich zwei Buszweigen, nämlich FR1 und FR2 eine Nachricht ausgesandt, und zwar in FR 1 die Nachricht b und in FR2 die Nachricht c. Der Sternkoppler 10 leitet die Nachricht b aus FR1 an FR3 weiter, wo sie empfangen wird. Die Nachricht c aus FR2 wird von dem Sternkoppler 10 an FR4 weitergeleitet, wo sie empfangen wird. Der Sternkoppler 10 teilt somit das Bussystem für die Dauer von Zeitschlitz 22 in zwei Teilsysteme auf, nämlich in das aus FR1 und FR3 bestehende Teilsystem und das aus FR2 und FR4 bestehende Teilsystem. Diese Aufteilung gilt auch während des Zeitschlitzes 24. Hier wird in FR1 die Nachricht d ausgesandt und an FR3 weitergeleitet. In FR4 wird die Nachricht e und an FR2 weitergeleitet.

Im Zeitschlitz 26 werden ebenfalls zwei Teilsysteme definiert, aber andere Teilsysteme als in den Zeitschlitzen 22 und 24: In FR4 wird die Nachricht f ausgesandt, und sie wird von dem Sternkoppler 10 an FR1 weitergeleitet und dort empfangen. In FR3 wird die Nachricht g ausgesandt, und sie wird von dem Sternkoppler 10 an FR2 weitergeleitet und empfangen. Für die Dauer des Zeitschlitzes 26 gibt es somit virtuell ein Teilsystem aus FR1 und FR4 und ein Teilsystem aus FR2 und FR3.

Im Zeitsystem 28 arbeitet der Sternkoppler 10 dann wieder wie ein herkömmlicher Sternkoppler: Nur in einem Buszweig, vorliegend in FR4, wird eine Nachricht ausgesandt, nämlich die Nachricht h, und sie wird an sämtliche andere Buszweige FR1, FR2, FR3 weitergeleitet und dort empfangen.

Der Sternkoppler 10 macht in besonders effizienter Weise von der zur Verfügung stehenden Bandbreite eines FlexRay-Systems Gebrauch. Dieses System wird in den Zeitschlitzen 20 und 28 als ein ganzes System behandelt und zerfällt in den Zeitschlitzen 22 und 24 sowie 26 in Teilsysteme, allerdings lediglich virtuell. Es sind keine Gateways erforderlich. Es ist nicht notwendig, dass in einzelnen Teilsystemen jeweils eine eigene Uhrensynchronisation stattfindet, denn dies kann in den Zeitschlitzen 20 und 28 erfolgen. Somit sind keinerlei Änderungen am Protokoll notwendig. Im Sternkoppler 10 ist gleichzeitig die Funktion eines Buswächters 18 bereitgestellt.

**Patentansprüche**

**1.** Sternkoppler (10) für ein Bussystem, mit einer Mehrzahl von Anschlüssen (11), an die Buszweige (FR1, FR2, FR3, ..., FRn) anschließbar sind, wobei die Anschlüsse (11) über einen jeweiligen Sender-Empfänger (12) mit einer digitalen Datenverarbeitungseinheit (13) gekoppelt sind, wobei die Sender-Empfänger (12) dazu ausgelegt sind, über den jeweiligen zugehörigen Anschluss (11) einlaufende analoge Signale in zur Datenverarbeitungseinheit (13) weitergegebene digitale Signale zu wandeln und von der Datenverarbeitungseinheit (13) ausgesandte digitale Signale in zu dem jeweiligen zugehörigen Anschluss (11) weitergegebene analoge Signale zu wandeln, wobei die Datenverarbeitungseinheit (13) einen Zeitgeber (16) umfasst, so dass für jeden Anschluss (11) die Zeit in eine sich zyklisch wiederholende Folge von Zeitschlitzen (20 , 22 , 24 , 26 , 28) einteilbar ist, und wobei die Datenverarbeitungseinheit (13) dazu ausgelegt ist, ein von einem Anschluss (11) in einem vorbestimmten zu dem Anschluss (11) definierten Zeitschlitz empfangenes Signal an zumindest einen gemäß einer vorbestimmten Zuordnung festgelegten weiteren Anschluss (11) in einem durch die vorbestimmte Zuordnung festgelegten zu dem weiteren Anschluss (11) definierten Zeitschlitz (20 , 22 , 24 , 26 , 28) weiterzuleiten,
**dadurch gekennzeichnet, dass**
bei dem Sternkoppler (10) für jeden Anschluss (11) gleiche Zeitschlitze definiert sind und der Sternkoppler (10) dazu eingerichtet ist, Signale in einem anderen Zeitschlitz weiterzugeben als sie eintreffen.

2. Sternkoppler (10) nach Anspruch 1, wobei für über zumindest einen Anschluss (11) eintreffende Signale die Zuordnung für zwei unterschiedliche zu dem Anschluss definierte Zeitschlitze (20 , 22 , 24 , 26 , 28) unterschiedlich ist.

3. Sternkoppler (10) nach Anspruch 2, wobei für zumindest einen der Anschlüsse gilt, dass ein in einem ersten zu diesem Anschluss definierten Zeitschlitz (20) eintreffendes Signal an einen ersten weiteren Anschluss weitergeleitet wird und ein in einem zweiten zu diesem Anschluss definierten Zeitschlitz (22 , 24) eintreffendes Signal nicht an den ersten weiteren Anschluss weitergeleitet wird.

4. Sternkoppler (10) nach Anspruch 1, bei dem in zumindest einem Zeitschlitz (22 , 24 , 26) Signale über zumindest zwei unterschiedliche Anschlüsse (11) empfangbar sind und das von einem ersten Anschluss eintreffende Signal an zumindest einen ersten weiteren Anschluss weitergeleitet wird und das von einem zweiten Anschluss im selben Zeitschlitz (22 , 24 , 26) eintreffende Signal an zumindest einen zweiten weiteren Anschluss weitergeleitet wird.

5. Sternkoppler (10) nach einem der vorhergehenden Ansprüche, bei dem eine Zykluszeit definiert ist, die für zumindest zwei unterschiedliche Anschlüsse (11) in Zeitschlitze unterschiedlicher Länge eingeteilt wird.

6. Sternkoppler (10) nach einem der vorhergehenden Ansprüche, bei dem die Signale in Form von Nachrichten vorliegen und die Nachrichten durch den Sternkoppler dekodierbar sind.

7. Sternkoppler (10) nach einem der vorhergehenden Ansprüche, wobei der Sternkoppler in analogen und digitalen Halbleiterprozessen gefertigt ist.

8. Sternkoppler (10) nach einem der vorhergehenden Ansprüche, bei dem der Sternkoppler einen Eingang zum Einspeisen eines Taktes aufweist.

9. Bussystem mit einem Sternkoppler (10) nach einem der vorhergehenden Ansprüche, an dem zumindest drei Buszweige (FR1, FR2, FR3, ..., FRn) angeschlossen sind.

10. Bussystem nach Anspruch 9, **dadurch gekennzeichnet, dass** die Datenverarbeitungseinheit (13) dazu ausgelegt ist, ein von einem Buszweig an einem Anschluss (11) eintreffendes Signal nur an einen Teil der weiteren Buszweige weiterzuleiten.

11. Bussystem nach Anspruch 9, **dadurch gekennzeichnet, dass** die Busspannung zwischen 1 V und 4 V beträgt.

12. Verfahren zum Austauschen von Signalen in einem Bussystem (10), in dem eine Mehrzahl von Buszweigen (FR1, FR2, FR3, ..., FRn) über einen Sternkoppler (10) gekoppelt ist, wobei zu jedem Buszweig (FR1, FR2, FR3 ... FRn) eine Folge von Zeitschlitzen definiert ist, wobei in zumindest einem ersten Buszweig in zumindest einem zu diesem ersten Buszweig definierten Zeitschlitz (20 , 22 , 24 , 26 , 28) ein Signal ausgesandt wird und der Sternkoppler das Signal an zumindest einen in Abhängigkeit von dem ersten Buszweig und dem Zeitschlitz, in dem das Signal ausgesandt wurde, festgelegten weiteren Buszweig weiterleitet,
**dadurch gekennzeichnet, dass**
bei dem Sternkoppler (10) für jeden Anschluss (11) gleiche Zeitschlitze definiert werden und Signale in einem anderen Zeitschlitz weitergegeben werden als sie eintreffen.

13. Verfahren nach Anspruch 12, bei dem in zwei Buszweigen sich zeitlich überschneidende Signale ausgesandt und zu unterschiedlichen weiteren Buszweigen weitergeleitet werden.

14. Verfahren nach Anspruch 13, bei dem zu zumindest einer Teilmenge von Buszweigen dieselbe Folge von Zeitschlitzen definiert ist und in einem ersten dieser Zeitschlitze (22 , 24 , 26) in zumindest zwei Buszweigen der Teilmenge ein Signal ausgesandt wird, wobei die beiden Signale an unterschiedliche Buszweige weitergeleitet werden.

15. Verfahren nach Anspruch 14, bei dem in einem zweiten (20 , 28) der Zeitschlitze in nur einem Buszweig der Teilmenge ein Signal ausgesandt wird und an alle weiteren Buszweige weitergeleitet wird.

**Claims**

1.  Star coupler (10) for a bus system with a number of ports (11) to which bus branches (FR1, FR2, FR3, ..., FRn) can be connected, wherein the ports (11) are joined via a respective transmitter-receiver (12) with a digital data processing unit (13), wherein the transmitter-receivers (12) are laid out in such a way as to change analogue signals arriving via the respective affiliated port (11) into digital signals passed on to the data processing unit (13) and to change digital signals sent out by the data processing unit (13) into analogue signals passed on to the affiliated port (11), wherein the data processing unit (13) contains a timer (16), so that for each port (11) the time can be divided into a cyclical repetitive sequence of time slots (20, 22, 24, 26, 28), and wherein the data processing unit (13) is laid out in such a way that it passes on a signal received by a port (11) in a pre-determined time slot defined for the port (11) to at least one other port (11) set down in accordance with the predetermined allocation in a defined time slot (20, 22, 24, 26, 28) set down by the predetermined allocation to the other port (11), **characterised in that**, equal time slots are defined for the star coupler (10) for each port (11), and the star coupler (10) is set up to pass signals on in different time slot as they arrive.

2.  Star coupler (10) according to Claim 1, wherein for signals arriving via at least one port (11) the allocation for two variable time slots defined for the port (20, 22, 24, 26, 28) is different.

3.  Star coupler (10) according to Claim 2, wherein for at least one of the ports a signal arriving in a first time slot (20) defined for this port is passed on to a further first port and a signal arriving in a second time slot (22, 24) defined for this port is not passed on to the further first port.

4.  Star coupler (10) according to Claim 1, for which signals in at least one time slot (22, 24, 26) can be received via at least two different ports (11) and the signal arriving from an initial port is passed on to at least one other first port and a signal arriving via a second port in the same time slot (22, 24, 26) is passed on to at least one further second port.

5.  Star coupler (10) according to one of the above claims for which a cycle period is defined, which can be divided into different lengths of time slots for at least two different ports (11).

6.  Star coupler (10) according to one of the above claims for which the signals are available in the form of messages, and the messages are able to be decoded by the star coupler.

7.  Star coupler (10) according to one of the above claims, wherein the star coupler is manufactured in analogue and digital semiconductor processes.

8.  Star coupler (10) according to one of the above claims for which the star coupler has an input for feeding in a pulse.

9.  Bus system with a star coupler (10) according to one of the above claims to which at least three bus branches (FR1, FR2, FR3, ..., FRn) are connected.

10. Bus system according to Claims 9, **characterized in that** the data processing unit (13) is laid out so as to only pass on a signal received from a bus branch arriving at a port (11) to a part of the other bus branches.

11. Bus system according to Claim 9, **characterized in that** the bus voltage is between 1 V and 4 V.

12. Process for exchanging signals in a bus system (10), in which a number of bus branches (FR1, FR2, FR3, ..., FRn) are connected via a star coupler (10), wherein for each bus branch (FR1, FR2, FR3, ..., FRn) a sequence of time slots is defined, wherein in at least one initial bus branch in at least one time slot (20, 22, 24, 26, 28) defined for this bus branch a signal is sent out and the star coupler passes the signal on to at least one further bus branch fixed dependent on the first bus branch and time slot in which the signal was sent out, **characterised in that** equal time slots are defined for each port (11) for the star coupler (10) and signals are passed on in a different time slot than the one they arrived in.

13. Process according to Claim 12, for which signals sent out at different times in two bus branches are passed on to further different bus branches.

14. Process according to Claim 13, for which the same sequence of time slots is defined for at least one subset of bus branches and in one of the first of these time slots (22, 24, 26) at least one signal is sent out in two bus branches of the subset, wherein the two signals are passed on to different bus branches.

15. Process according to Claim 14, for which a signal is sent out in one of the second time slots (20,28) in only one bus branch of the subset and is passed on to all further bus branches.

**Revendications**

1. Coupleur en étoile (10) pour un système de bus, comprenant une multitude de raccords (11), auxquels des branches de bus (FR1, FR2, FR3, ..., FRn) peuvent être raccordées, dans lequel les raccords (11) sont couplés à une unité de traitement de données (13) numérique par l'intermédiaire d'un émetteur-récepteur (12) respectif, dans lequel l'émetteur-récepteur (12) est configuré afin de convertir des signaux analogiques entrants par l'intermédiaire du raccord (11) respectif associé en des signaux numériques transférés à l'unité de traitement de données (13) et afin de convertir des signaux numériques envoyés par l'unité de traitement de données (13) en des signaux analogiques transférés au raccord (11) respectif associé, dans lequel l'unité de traitement de données (13) comprend une minuterie (16) si bien que le temps peut être divisé en une suite à répétition cyclique de créneaux de temps (20, 22, 24, 26, 28) pour chaque raccord (11), et dans lequel l'unité de traitement de données (13) est configurée afin de transférer un signal reçu par un raccord (11) dans un créneau de temps prédéterminé défini par rapport au raccord (11) à au moins un raccord (11) supplémentaire fixé selon une association prédéterminée dans un créneau de temps (20, 22, 24, 26, 28) défini par rapport au raccord (11) supplémentaire, fixé par l'association prédéterminée, **caractérisé en ce que** des créneaux de temps égaux pour chaque raccord (11) sont définis dans le coupleur en étoile (10), et que le coupleur en étoile (10) est configuré afin de transférer, dès leur réception, des signaux dans un autre créneau de temps.

2. Coupleur en étoile (10) selon la revendication 1, dans lequel l'association pour deux créneaux de temps (20, 22, 24, 26, 28) différents définis par rapport au raccord est différente pour des signaux entrants par l'intermédiaire d'au moins un raccord (11).

3. Coupleur en étoile (10) selon la revendication 2, dans lequel le fait qu'un signal entrant dans un premier créneau de temps (20) défini par rapport à l'un des raccords est transféré à un premier raccord supplémentaire et qu'un signal entrant dans un deuxième créneau de temps (22, 24) défini par rapport audit raccord n'est pas transféré au premier raccord supplémentaire est applicable pour au moins ledit raccord.

4. Coupleur en étoile (10) selon la revendication 1, où des signaux peuvent être reçus dans au moins un créneau de temps (22, 24, 26) par l'intermédiaire au moins de deux raccords (11) différents et le signal entrant par un premier raccord est transféré à au moins un premier raccord supplémentaire, et le signal entrant par un deuxième raccord dans le même créneau de temps (22, 24, 26) est transféré à au moins un deuxième raccord supplémentaire.

5. Coupleur en étoile (10) selon l'une quelconque des revendications précédentes, où une durée de cycle est définie, laquelle est divisée en créneaux de temps de différente longueur pour au moins deux raccords (11) différents.

6. Coupleur en étoile (10) selon l'une quelconque des revendications précédentes, où les signaux se présentent sous la forme de messages et les messages peuvent être décodés par le coupleur en étoile.

7. Coupleur en étoile (10) selon l'une quelconque des revendications précédentes, dans lequel le coupleur en étoile est fabriqué dans des processus à semiconducteurs analogiques et numériques.

8. Coupleur en étoile (10) selon l'une quelconque des revendications précédentes, où le coupleur en étoile présente une entrée servant à injecter une cadence.

9. Système de bus comprenant un coupleur en étoile (10) selon l'une quelconque des revendications précédentes, auquel au moins trois branches de bus (FR1, FR2, FR3, ..., FRn) sont raccordées.

10. Système de bus selon la revendication 9, **caractérisé en ce que** l'unité de traitement de données (13) est configurée afin de transférer un signal entrant par une branche de bus au niveau d'un raccord (11) seulement à une partie de la branche de bus supplémentaire.

**11.** Système de bus selon la revendication 9, **caractérisé en ce que** la tension de bus est comprise entre 1 V et 4 V.

**12.** Procédé servant à échanger des signaux dans un système de bus (10), dans lequel une multitude de branches de bus (FR1, FR2, FR3, ..., FRn) est couplée par l'intermédiaire d'un coupleur en étoile (10), dans lequel une suite de créneaux de temps est définie pour chaque branche de bus (FR1, FR2, FR3, ... FRn), dans lequel un signal est envoyé dans au moins une première branche de bus dans au moins un créneau de temps (20, 22, 24, 26, 28) défini par rapport à la première branche de bus et le coupleur en étoile transfère le signal à au moins une branche de bus supplémentaire fixée en fonction de la première branche de bus et du créneau de temps, dans lequel le signal a été envoyé, **caractérisé en ce que** des créneaux de temps identiques pour chaque raccord (11) sont définis dans le coupleur en étoile (10), et en ce que des signaux sont transférés, dès leur réception, dans un créneau de temps différent.

**13.** Procédé selon la revendication 12, où des signaux se recoupant d'un point de vue temporel sont envoyés dans deux branches de bus et sont transférés à des branches de bus supplémentaires différentes.

**14.** Procédé selon la revendication 13, où la même suite de créneaux de temps est définie pour au moins une quantité partielle de branches de bus et un signal est envoyé dans un premier desdits créneaux de temps (22, 24, 26) dans au moins deux branches de bus de la quantité partielle, dans lequel les deux signaux sont transférés à différentes branches de bus.

**15.** Procédé selon la revendication 14, où un signal est envoyé dans un deuxième créneau de temps (20, 28) des créneaux de temps dans seulement une branche de bus de la quantité partielle et est transféré à toutes les branches de bus supplémentaires.

Fig. 1

| | 20 | 22 | 24 | 26 | 28 |
|------|-----------|-----------|-----------|------------|------------|
| FR1 | Sende a | Sende b | Sende d | Empfange f | Empfange h |
| FR2 | Empfange a | Sende c | Empfange e | Empfange g | Empfange h |
| FR3 | Empfange a | Empfange b | Empfange d | Sende g | Empfange h |
| FR4 | Empfange a | Empfange c | Sende e | Sende f | Sende h |

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102005061395 A1
- WO 2008029320 A2